## Europäisches Patentamt
## European Patent Office
## Office européen des brevets

(11) Veröffentlichungsnummer: **0 143 878**
**B1**

## (12) EUROPÄISCHE PATENTSCHRIFT

(45) Veröffentlichungstag der Patentschrift:
**18.03.87**

(51) Int. Cl.⁴: **B 25 B 1/18,** B 29 C 45/03

(21) Anmeldenummer: **84107311.7**

(22) Anmeldetag: **26.06.84**

(54) **Formspannvorrichtung.**

(30) Priorität: **02.09.83 DE 3331676**

(43) Veröffentlichungstag der Anmeldung:
**12.06.85 Patentblatt 85/24**

(45) Bekanntmachung des Hinweises auf die Patenterteilung:
**18.03.87 Patentblatt 87/12**

(84) Benannte Vertragsstaaten:
**AT CH DE FR GB IT LI NL**

(56) Entgegenhaltungen:
**EP-A-0 025 995**
**WO-A-83/01038**
**DE-A-2 132 539**
**DE-A-2 724 020**
**DE-A-2 947 938**

(73) Patentinhaber: **KLÖCKNER- WERKE AKTIENGESELLSCHAFT, Klöcknerstrasse 29, D-4100 Duisburg 1 (DE)**

(72) Erfinder: **Späth, Wolfgang, Wiesenweg 6, D-7635 Schwanau (DE)**

(74) Vertreter: **Gross, Reinhold, Dr., Klöckner- Werke AG Patentabteilung Klöcknerstrasse 29, D-4100 Duisburg 1 (DE)**

## Beschreibung

Die Erfindung bezieht sich auf eine Formspannvorrichtung, bei der das Werkzeug mittels eines daran befestigten Spannelementes gegen die Formaufspannplatte mit einem Klemmorgan festspannbar ist, das aus einem Klemmkeil, der am freien Ende eines Spannkolbens angeordent ist, und einem komplementären Keil besteht, der mit dem Klemmkeil zusammenwirkt, indem deren schräge Keilflächen relativ zueinander verschiebbar angeordnet sind.

Aus der DE-OS 27 24 020 ist eine Spritzgießmaschine für Kunststoffe bekannt, die vier Zuganker aufweist, auf denen zwei Werkzeugträger geführt sind, an deren beiden aneinander gegenüberliegenden Seiten die beiden Spritzformhälften lösbar befestigt sind. Diese lösbare Befestigung besteht aus Führungsbolzen, die durch den Werkzeugträger hindurchgehen, wobei an dem aus dem Werkzeugträger herausragenden Teil des Führungsbolzens Keilflächen ausgebildet sind, die von einer Gabel umfaßt werden, welche komplementäre Keilflächen aufweist, wobei die Gabel mit einem hydraulisch oder pneumatisch betätigten Hubzylinder in Verbindung steht.

Diese Formspannvorrichtung hat jedoch den Nachteil, daß das als Bolzen ausgebildete Spannelement eine Ausnehmung mit einer Keilfläche aufweisen muß, welche mit einer Keilfläche des am Spannkolben vorgesehenen Klemmkeils zusammenwirkt, um das Werkzeug festzulegen. Diese Anordnung erfordert eine relativ große Abmessung, eine komplizierte Herstellung und eine genaue Bearbeitung des Bolzens. Außerdem muß der Bolzen mit seiner Keilfläche exakt auf die komplementäre Keilfläche des Klemmkeils des Bolzens ausgerichtet werden, was eine genaue Justierung des Bolzens erfordert. Ein weiterer Nachteil besteht darin, daß der Bolzen beim Spannen eine zu seiner Längsrichtung quergerichtete Kraft aufnehmen muß, wodurch ungünstige Biegemomente übertragen werden. Infolge der Querkräfte kann es daher zu einer Verschiebung des Werkzeugs kommen. Deshalb werden im allgemeinen besondere Zentrierbolzen verwendet, die einen zusätzlichen Aufwand erfordern.

Der Erfindung liegt die Aufgabe zugrunde, bei Spannvorrichtungen der eingangs genannten Art die Ausbildung des Spannelementes zu vereinfachen und das Auftreten von Querkräften beim Festspannen des Werkzeuges zu vermeiden.

Diese Aufgabe wird gemäß dem Kennzeichnungsteil des Anspruches 1 gelöst.

Ausgestaltungen der Erfindung sind Gegenstand der Ansprüche 2 bis 6.

Die Erfindung hat den Vorteil, daß der Spannbolzen keine Keilfläche aufweisen muß, so daß dieser also diesbezüglich überhaupt keiner besonderen Bearbeitung mehr bedarf, sondern der Bolzen durchgehend als glatter Bolzen ausgebildet werden kann. Außerdem bleibt der Spannbolzen auch frei von Querkräften, so daß also keine ungünstigen Biegemomente mehr auftreten, weil die beiden Keile Aussparungen für den Spannbolzen aufweisen, so daß sie diesen umfassen und dadurch seitens der Klemmverbindung nur Längskräfte in den Spannbolzen eingebracht werden. Dadurch daß in den Spannbolzen keine Querkärfte mehr eingebracht werden, werden auch die dadurch unvermeidlichen Werkzeugverschiebungen vermieden. Außerdem ist auch keine besondere Zentrierung des Werkzeuges mehr erforderlich, und die Spannvorrichtung zeichnet sich durch besonders einfache Spannelemente aus.

Die Erfindung ist anhand eines Ausführungsbeispieles, welches in den Zeichnungen veranschaulicht ist, im einzelnen näher beschrieben. Es zeigen:

Fig. 1 bis 3 Querschnitte durch die erfindungsgemäße Spannvorrichtung in verschiedenen Phasen des Spannvorgangs,

Fig. 4 einen Schnitt längs der Linie IV-IV der Fig. 3,

Fig. 5 einen Schnitt längs der Linie V-V der Fig. 4.

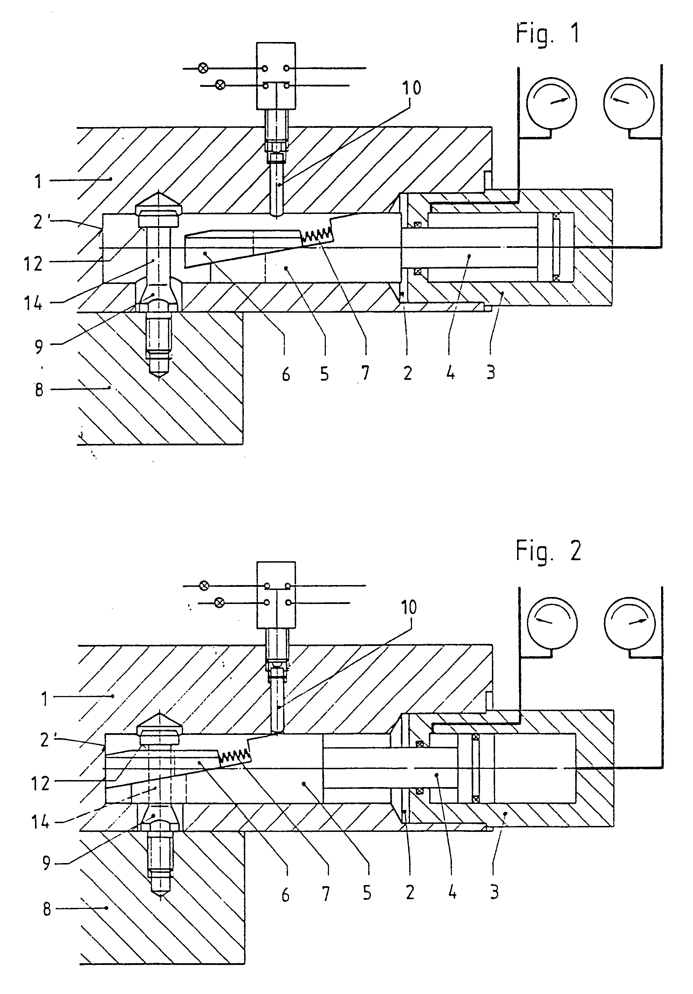

In der Fig. 1 ist die Formaufspannplatte mit der Bezugsziffer 1 bezeichnet. In dieser Formaufspannplatte 1 ist seitlich eine Ausnehmung 2 vorgesehen, die mehrstufig ausgebildet ist. Die Ausnehmung 2 hat vorzugsweise die Form eines Sackloches, dessen Endwand 2' als Anschlag für den komplementären Keil 6 beim Festspannen des Werkzeuges dient. Am seitlichen Ende der Formaufspannplatte 1 ist der Zylinder 3 eines hydraulischen Antriebs eingesetzt, in welchem der Spannkolben 4 verschiebbar angeordnet ist. An dem Spannkolben 4 ist der Klemmkeil 5 befestigt, auf dem ein dazu komplementärer Keil 6 relativ zu dem Klemmkeil 5 längs der schrägen Keilflächen verschiebbar angeordnet ist. Beide Keilstücke 5, 6 sind mittels einer Feder 7 miteinander verbunden, die sich längs der schrägen Keilfläche erstreckt. Zur Befestigung des Werkzeuges 8 dient der Spannbolzen 9, der in die Formaufspannplatte 1 eingesetzt ist. Ein Fühler 10 dient zur Steuerung des hydraulischen Antriebs 11.

In der Fig. 1 ist die Formaufspannvorrichtung 1 im gelösten Zustand veranschaulicht, wobei der Spannkolben 4 sich in der zurückgefahrenen Stellung befindet. In dieser Stellung kann die Werkzeughälfte 8 noch abgenommen bzw. eingesetzt werden.

In der Fig. 2 hat der Klemmkeil 5 den Fühler 10 betätigt, so daß die Beaufschlagung des Spannsystems unmittelbar bevorsteht und der hohe Spanndruck angelegt wird.

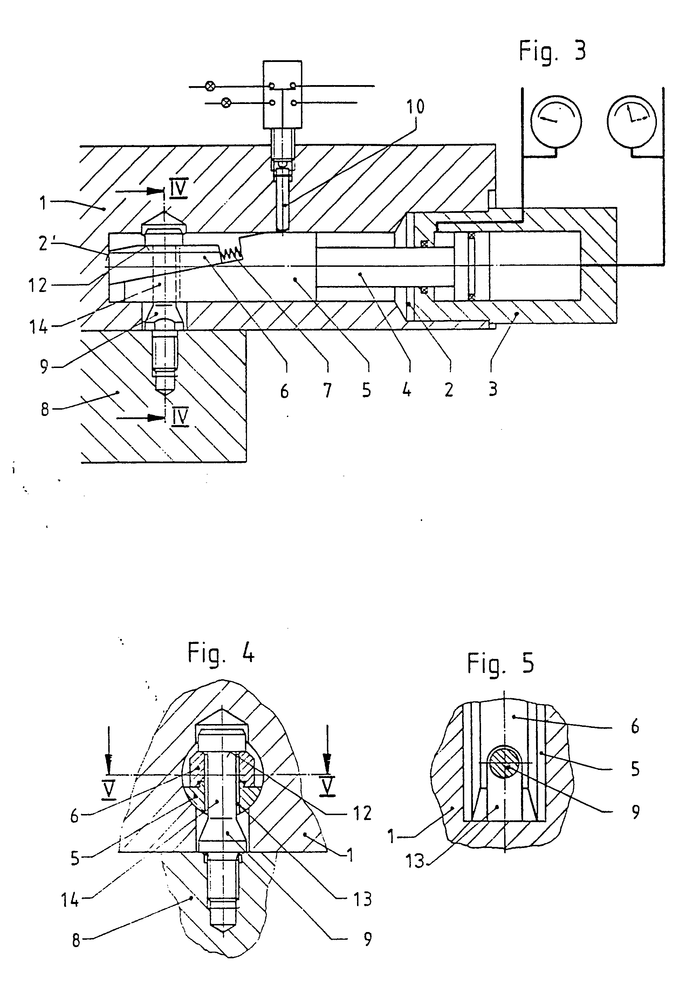

In der Fig. 3 sind die beiden Keilstücke 5, 6 in die Spannstellung eingefahren, und dabei wird das verschiebbare Keilstück am Grunde der Ausnehmung nach innen geschoben, wodurch es sich fest gegen die Anschlagfläche 12 auf der Innenseite des Kopfes des Spannbolzens 9 anlegt. In dieser Stellung ist das Werkzeug 8 verspannt. Der Spanndruck fällt dann nach einer vorgegebenen eingestellten Zeit auf den Haltedruck ab.

Aus den Fig. 4 und 5 ist die Lage des Spannbolzens 9 und insbesondere die Lage des Schaftes 14 des Spannbolzens 9 relativ zu den Keilstücken 5, 6 veranschaulicht. Wie insbesondere aus der Fig. 5 ersichtlich ist, weisen die Keilstücke 5, 6 Ausnehmungen 13 in langlochähnlicher Form auf, um die Relativbewegungen der Keilstücke 5, 6 zu ermöglichen. Dabei greift der Schaft 14 des Spannbolzen 9 in die Ausnehmungen 13 ein.

Bei Verwendung eines Spannbolzens 9 kann auch der Bolzenschaft 14 durch eine entsprechende Bohrung des komplementären Keils 6 hindurchragen, während der bewegbare Klemmkeil 5 mit einer Längsausnehmung 13 versehen ist, in welcher während des gesamten Bewegungsvorganges der Bolzenschaft 14 umfaßt wird.

**Patentansprüche**

1. Formspannvorrichtung, bei der das Werkzeug mittels eines daran befestigten Spannelementes gegen die Formaufspannplatte mit einem Klemmorgan festspannbar ist, das aus einem Klemmkeil, der am freien Ende eines Spannkolbens angeordnet ist, und einem komplementären Keil besteht, der mit dem Klemmkeil zusammenwirkt, indem deren schräge Keilflächen relativ zueinander verschiebbar angeordnet sind, dadurch gekennzeichnet, daß der Klemmkeil (5) über ein elastisches Organ (7) mit dem komplementären Keil (6) verbunden ist und daß der komplementäre Keil (6) derart gegen einen festen Anschlag bewegbar ist, daß eine Relativbewegung zwischen den beiden Keilen (5, 6) durch weiteres Verschieben des Klemmkeiles (5) erfolgt.

2. Formspannvorrichtung nach Anspruch 1, dadurch gekennzeichnet, daß das elastische Organ (7) sich längs der Keilfläche erstreckt.

3. Formspannvorrichtung nach einem der vorhergehenden Ansprüche, dadurch gekennzeichnet, daß bei der Ausbildung des Spannelementes als Spannbolzen (9) der Klemmkeil (5) und der dazu komplementäre Keil (6) mit einer Längsausnehmung (13) versehen sind, in die der Schaft (14) des Spannbolzen eingreift.

4. Formspannvorrichtung nach einem der vorhergehenden Ansprüche, dadurch gekennzeichnet, daß sie seitlich in eine Ausnehmung (2) der Aufspannplatte (1) einmontiert ist, welche die Form eines Sackloches hat, dessen Endfläche als Anschlagfläche für den komplementären Keil (6) beim Festspannen des Werkzeuges dient.

5. Formspannvorrichtung nach Anspruch 1, dadurch gekennzeichnet, daß bei Verwendung eines Spannbolzens (9) der Bolzenschaft durch eine entsprechende Bohrung des komplementären Keils (6) hindurchragt, während der bewegbare Klemmkeil mit einer Längsausnehmung (13) versehen ist, in welcher während des gesamten Bewegungsvorganges der Bolzenschaft umfaßt wird.

**Claims**

1. Die-clamping device, in which, by means of a tensioning element fastened to the tool, the tool can be held tight against the die platen by a clamping member that comprises a clamping wedge arranged at the free end of a clamping piston and a complementary wedge which cooperates with the clamping wedge, the inclined wedge faces thereof being arranged so that they are displaceable relative to one another, characterised in that the clamping wedge (5) is connected via a resilient member (7) to the complementary wedge (6) and the complementary wedge (6) is so movable against a rigid stop that a relative movement between the two wedges (5, 6) occurs as a result of further displacement of the clamping wedge (5).

2. Die-clamping device according to claim 1, characterised in that the resilient member (7) extends along the wedge face.

3. Die-clamping device according to one of the previous claims, characterised in that when the tensioning element is designed as a tensioning bolt (9) the clamping wedge (5) and the complementary wedge (6) are provided with a longitudinal recess (13) in which the shaft (14) of the tensioning bolt engages.

4. Die-clamping device according to one of the preceding claims, characterised in that it is mounted laterally in a recess (2) of the clamping plate (1) which has the form of a blind hole, the end face of which serves as stop face for the complementary wedge (6) when tightening the tool.

5. Die-clamping device according to claim 1, characterised in that when using a tensioning bolt (9) the shaft of the bolt projects through a corresponding borehole of the complementary wedge (6), while the movable clamping wedge is provided with a longitudinal recess (13) in which the bolt shaft is enclosed during the entire movement operation.

**Revendications**

1. - Dispositif de fixation de moule dans lequel le moule peut être bloqué, à l'aide d'un élément de serrage fixé audit moule, contre un plateau de fixation de moule muni d'un organe de blocage composé d'une clavette de blocage placée à l'extrémité libre d'un piston de serrage et d'une clavette complémentaire qui coopère avec la clavette de blocage du fait que les surfaces obliques des clavettes sont disposées de façon à pouvoir être déplacées l'une par rapport à l'autre, caractérisé en ce que la clavette de blocage (5) est reliée à la clavette complémentaire (6) par l'intermédiaire d'un organe élastique (7) et que la clavette complémentaire (6) peut être déplacée contre une butée fixe de sorte qu'un déplacement ultérieur de la clavette de blocage (5) provoque un mouvement relatif entre les deux clavettes (5, 6).

2. - Dispositif de fixation de moule selon la revendication 1, caractérisé en ce que l'organe élastique (7) s'étend le long de la surface de clavette.

3. - Dispositif de fixation de moule selon l'une des revendications 1 ou 2, caractérisé en ce que, lorsque l'élément de serrage est conformé en boulon de tension (9), la clavette de blocage (5) et la clavette complémentaire (6) sont munies d'un évidement longitudinal (13) dans lequel s'engage la tige (14) du boulon de tension.

4. - Dispositif de fixation de moule selon l'une quelconque des revendication 1 à 3, caractérisé en ce qu'il est monté latéralement dans un évidement (2) du plateau de fixation (1), ledit évidement présentant le moule d'un trou borgne dont la surface terminale sert de butée pour la clavette complémentaire (6) lors du blocage du moule.

5. - Dispositif de fixation de moule selon la revendication 1, caractérisé en ce que, dans le cas de l'utilisation d'un boulon de tension (9), la tige du boulon traverse un alésage correspondant de la clavette complémentaire (6), tandis que la clavette de blocage mobile est munie d'un évidement longitudinal (13) dans lequel la tige du boulon est contenue pendant toute l'opération de mouvement.

**0 143 878**

Fig. 1

Fig. 2

1

Fig. 3

Fig. 4

Fig. 5